# EUROPÄISCHE PATENTANMELDUNG

(11) **EP 4 084 269 A1**
(43) Veröffentlichungstag der Anmeldung: **02.11.2022**
(21) Anmeldenummer: 22168174.5
(22) Anmeldetag: 13.04.2022
(51) Int. Cl.: H02J 7/00, B64D 27/24, B64D 35/08, H02J 1/08

(54) **ELEKTRISCHES ANTRIEBSSYSTEM**

(30) Priorität: 27.04.2021 DE 102021110774
(71) Anmelder: Rolls-Royce Deutschland Ltd & Co KG, 15827 Blankenfelde-Mahlow (DE)
(72) Erfinder: SCHILDT, Philipp, 96129 Strullendorf (DE); SONS, Markus, 90408 Nürnberg (DE)

(57) **Zusammenfassung**

Die Erfindung betrifft ein elektrisches Antriebssystem, das aufweist: mindestens eine elektrische Antriebseinheit (10), die einen Elektromotor (12) und Wechselrichter (131-134) umfasst, wobei die Wechselrichter (131-134) jeweils über einen Hochvoltbus (141-144) mit Gleichspannung versorgt werden; ein Hauptbatteriesystem (5), das eine Mehrzahl von Batteriemodulen (52-54) aufweist, die die Hochvoltbusse (141-144) jeweils mit Gleichspannung beaufschlagen; und eine Mehrzahl von Reservebatterien (61-64), wobei für jeden Hochvoltbus (141-144) eine gesonderte Reservebatterie (61-64) vorgesehen ist. Das Antriebssystem ist dazu ausgebildet, bei Vorliegen eines entsprechenden Steuersignals jeweils für einen der Hochvoltbusse (141-144) einen Wechsel der Beaufschlagung mit Gleichspannung durchzuführen, wobei von einer Beaufschlagung mit Gleichspannung des dem Hochvoltbus (141-144) zugeordneten Batteriemoduls (52-54) des Hauptbatteriesystems (5) zu einer Beaufschlagung mit Gleichspannung der dem Hochvoltbus (141-144) zugeordneten Reservebatterie (61-64) gewechselt wird. In einem weiteren Erfindungsaspekt betrifft die Erfindung ein Verfahren zur Beaufschlagung eines Hochvoltbusses mit Gleichspannung einer Reservebatterie.

## Beschreibung

Die Erfindung betrifft ein elektrisches Antriebssystem sowie ein Verfahren zur Beaufschlagung eines Hochvoltbusses, der in einem erfindungsgemäßen Antriebssystem einen Wechselrichter mit Gleichspannung versorgt, mit Gleichspannung.

Es ist bekannt, in einem Elektroflugzeug eine Mehrzahl von Batterien einzusetzen, die eine oder mehrere elektrische Antriebseinheiten mit elektrischer Energie versorgen. Jede elektrische Antriebseinheit umfasst dabei einen Elektromotor, der typischerweise einen Propeller antreibt. Die Ankopplung der Batterien an die elektrischen Antriebseinheiten erfolgt über Gleichspannungswandler, die es erlauben, die durch die verschiedenen Batterien bereitgestellten Leistungen in gewünschter Weise aufzuteilen.

Es besteht bei elektrischen Antriebssystemen, insbesondere bei solchen für Elektroflugzeuge das Erfordernis, ausreichend Reserveenergie mitzuführen und im Bedarfsfall bereitstellen zu können.

Der vorliegenden Erfindung liegt die Aufgabe zugrunde, ein elektrisches Antriebssystem und ein zugehöriges Verfahren bereitzustellen, die in effektiver Weise die Bereitstellung von Reserveenergie für den Betrieb ermöglichen.

Diese Aufgabe wird durch elektrisches Antriebssystem mit den Merkmalen des Anspruchs 1 und ein Verfahren mit den Merkmalen des Anspruchs 14 gelöst. Ausgestaltungen der Erfindung sind in den abhängigen Ansprüchen angegeben.

Danach stellt die vorliegende Erfindung gemäß einem ersten Erfindungsaspekt ein elektrisches Antriebssystem bereit, das mindestens eine elektrische Antriebseinheit aufweist, die einen Elektromotor und Wechselrichter umfasst, die jeweils eine eingangsseitige Gleichspannung in eine ausgangsseitige Wechselspannung wandeln, die dem Elektromotor bereitgestellt wird. Dabei werden die Wechselrichter jeweils über einen Hochvoltbus mit Gleichspannung versorgt. Das Antriebssystem umfasst des Weiteren ein Hauptbatteriesystem, das eine Mehrzahl von Batteriemodulen aufweist, wobei die Batteriemodule dazu vorgesehen sind, die Hochvoltbusse jeweils mit einer Gleichspannung zu beaufschlagen.

Ferner umfasste das Antriebssystem eine Mehrzahl von Reservebatterien, wobei für jeden Hochvoltbus eine gesonderte Reservebatterie vorgesehen ist. Das Antriebssystem ist dazu ausgebildet, bei Vorliegen eines entsprechenden Steuersignals jeweils für einen der Hochvoltbusse einen Wechsel der Beaufschlagung mit Gleichspannung durchzuführen, wobei von einer Beaufschlagung mit Gleichspannung des dem Hochvoltbus zugeordneten Batteriemoduls des Hauptbatteriesystems zu einer Beaufschlagung mit Gleichspannung der dem Hochvoltbus zugeordneten Reservebatterie gewechselt wird. Es wird also ein Wechsel der Beaufschlagung mit Gleichspannung vom Hauptbatteriesystem zur Reservebatterie durchgeführt.

Die Erfindung beruht auf dem Gedanken, die einzelnen Hochvoltbusse der Antriebseinheit bzw. des Hauptbatteriesystems gesondert zu betrachten (auch als "Multi-Lane" Ansatz bezeichnet) und für jeden Hochvoltbus bzw. jede "Lane" eine gesonderte Energiereserve in Form einer gesonderten Reservebatterie vorzusehen. Sofern die durch das zugeordnete Batteriemodul des Hauptbatteriesystems bereitgestellte Energie nicht mehr ausreichend ist oder andere vordefinierte Kriterien vorliegen, wird ein Steuersignal erzeugt und ein Wechsel der Beaufschlagung mit Gleichspannung des betrachteten Hochvoltbusses vom Hauptbatteriesystem auf die Reservebatterie durchgeführt. Ein solcher Wechsel kann für jeden Hochvoltbus bei Vorliegen vordefinierter Kriterien gesondert durchgeführt werden.

Ein mit der Erfindung verbundenen Vorteil besteht darin, dass die Möglichkeit besteht, die Reservebatterien speziell für ihren Einsatz als Reservebatterien auszulegen und für bestimmte Arbeitsbereiche zu optimieren, da sie für den Normalbetrieb nicht vorgesehen sind und lediglich als Reserve zur Verfügung stehen.

Dementsprechend sieht eine Ausgestaltung der Erfindung vor, dass die Reservebatterien im Vergleich zu den Batteriemodulen des Hauptbatteriesystems auf eine höhere Energiedichte und eine geringere Leistungsdichte ausgelegt sind (wobei die gravimetrische oder volumetrische Energiedichte bzw. Leistungsdichte betrachtet werden kann). Während die Batteriemodule des Hauptbatteriesystems dafür ausgebildet sind, eine maximale Leistung in bestimmten Betriebsbereichen, beispielsweise beim Starten eines Flugzeugs bereitzustellen, und dementsprechend eine hohe Leistungsdichte benötigen, können die Reservebatterien mit einer geringeren Leistungsdichte und dafür einer höheren Energiedichte ausgebildet sein. Beispielsweise ist es bei dem Einsatz der Erfindung in Elektroflugzeugen ausreichend, mit den Reservebatterien ein bereits in der Luft befindliches Elektroflugzeug sicher zu landen und hierzu eine große verbleibende Flugentfernung bereitzustellen, wofür eine hohe Energiedichte, nicht jedoch eine hohe Leistungsdichte von Vorteil ist.

Die Optimierung der Reservebatterie im Hinblick auf eine hohe Energiedichte kann durch geeignete Anordnung der Batteriezellen und oder durch geeignete Zelltypen/Batterietypen erfolgen, wie dem Fachmann an sich bekannt ist.

Eine weitere Ausgestaltung sieht vor, dass die Reservebatterien im Vergleich zu den Batteriemodulen des Hauptbatteriesystems auf eine geringere Zykluslebensdauer ausgelegt sind. Dies erlaubt Optimierungen im Hinblick auf andere Parameter der Reservebatterie, beispielsweise im Hinblick auf Gewicht und Kosten.

Es wird darauf hingewiesen, dass im Sinne der vorliegenden Erfindung als "Batterie" sowohl primäre Batterien, die nicht wieder aufladbar sind, als auch sekundäre Batterien (auch als Akkumulatoren bezeichnet), die wiederaufladbar sind, bezeichnet werden. Dabei sehen Ausgestaltungen der Erfindung vor, dass zur Realisierung der Reservebatterien primäre Batterien eingesetzt werden, während zur Realisierung des Hauptbatteriesystems sekundäre Batterien eingesetzt werden. Alternativ werden sekundäre Batterien auch zur Realisierung der Reservebatterien eingesetzt.

Weiter wird darauf hingewiesen, dass der Begriff "bei Vorliegen eines entsprechenden Steuersignals" dahingehend zu verstehen ist, dass ein Wechsel in der Beaufschlagung eines Hochvoltbusses mit Gleichspannung nicht zufällig erfolgt, sondern die Folge entsprechender Befehle ist, die als Steuersignale bezeichnet werden. Dabei ist der Begriff "bei Vorliegen eines entsprechenden Steuersignals" nicht dahingehend zu verstehen, dass notwendigerweise nur ein Steuersignal für den Wechsel der Beaufschlagung eines Hochvoltbusses mit Gleichspannung verantwortlich ist. Hierbei kann es sich um eine Mehrzahl von Steuersignalen handeln, die gleichzeitig oder hintereinander einen Wechsel der Beaufschlagung eines Hochvoltbusses mit Gleichspannung bewirken.

Eine Ausgestaltung der Erfindung sieht vor, dass das Hauptbatteriesystem als austauschbares Batteriesystem ausgebildet ist, während die Reservebatterien im Antriebssystem fest installiert sind. Dies erlaubt es, das Hauptbatteriesystem zwischen verschiedenen Betriebsphasen, insbesondere nach dem Landen bzw. vor dem Starten eines Elektroflugzeugs auszutauschen, während die Reservebatterien im Flugzeug verbleiben können. Dies reduziert den Wartungsaufwand.

Das Steuersignal zum Wechsel der Beaufschlagung eines Hochvoltbusses mit Gleichspannung kann intern oder extern erzeugt werden. Eine erste Ausgestaltung hierzu sieht vor, dass das Antriebssystem dazu ausgebildet ist, bei Vorliegen eines internen, durch eine Steuereinheit des Antriebssystems bereitgestellten Steuersignals den Wechsel der Beaufschlagung mit Gleichspannung durchzuführen. Dabei ist die Steuereinheit dazu ausgebildet, Informationen über den Ladezustand der Batteriemodule des Hauptbatteriesystems zu erhalten und unter Berücksichtigung dieses Ladezustandes ein derartiges Steuersignal zu erzeugen. Beispielsweise überwacht die Steuereinheit den Ladezustand eines Batteriemoduls und generiert ein Steuersignal, wenn der Ladezustand einen vorgegebenen Wert unterschreitet.

Eine zweite Ausgestaltung sieht vor, dass das Antriebssystem dazu ausgebildet ist, bei Vorliegen eines externen, durch eine Bedienperson erzeugten Steuersignals den Wechsel der Beaufschlagung mit Gleichspannung durchzuführen. Beispielsweise wird ein solches Steuersignal über eine Mensch-Maschine-Schnittstelle durch den Piloten eines Flugzeugs erzeugt, in dem das erfindungsgemäße Antriebssystem realisiert ist. Dabei kann die genannte Steuereinheit dem Piloten Informationen über den Betriebszustand des Hauptbatteriesystems bereitstellen, die es dem Piloten erlauben, eine Entscheidung zu treffen.

Eine weitere Ausgestaltung der Erfindung sieht vor, dass die Batteriemodule des Hauptbatteriesystems und die Reservebatterien jeweils ohne Gleichspannungswandler an die Hochvoltbusse angeschlossen sind. Dabei wird die Gleichspannung auf den Hochvoltbussen direkt durch die Spannung der jeweils zugeordneten Batteriemodule des Batteriesystems bzw. der jeweils zugeordneten Reservebatterie bestimmt. Durch eine Ausgestaltung des Antriebssystems ohne Gleichspannungswandler werden erhebliche Kosten eingespart und erfolgt darüber hinaus eine Gewichtsreduktion.

Dabei sieht eine Ausgestaltung vor, dass ein Wechsel der Spannungsversorgung auf eine Spannungsversorgung mittels der Reservebatterie bei Vorliegen eines Steuersignals derart erfolgt, dass
- der Strom an dem Hochvoltbus, auf dem der Wechsel der Beaufschlagung mit Gleichspannung erfolgen soll, zunächst auf Null gesetzt wird,
- anschließend der betrachtete Hochvoltbus vom Hauptbatteriesystem getrennt wird,
- die Spannung auf dem Hochvoltbus an die Spannung der zuzuschaltenden Reservebatterie angepasst wird, und
- der Hochvoltbus mit der Reservebatterie verbunden wird.

Statt der Verwendung von Gleichspannungswandlern wird die Energieversorgung über geeignetes Schalten der Batteriekontakte von der Hauptbatterie auf die Reservebatterie gewechselt.

Das Setzen des Stroms an dem Hochvoltbus, auf dem der Wechsel der Beaufschlagung mit Gleichspannung erfolgen soll, auf Null kann dadurch erfolgen, dass an dem Wechselrichter, der über den betrachteten Hochvoltbus mit Spannung versorgt wird, ein Drehmoment von Null angefordert wird. Hierdurch kann der nachfolgende Schritt, d.h. das Trennen des betrachteten Hochvoltbusses vom Hauptbatteriesystem, lastfrei erfolgen.

Eine Ausgestaltung hierzu sieht dabei vor, dass das Antriebssystem des Weiteren dazu ausgebildet ist,
- die von den Wechselrichtern, die an die anderen Hochvoltbusse angeschlossen sind, bereitgestellte Leistung heraufzusetzen, wenn der Strom an dem Hochvoltbus auf Null gesetzt wird, und
- die von den Wechselrichtern, die an die anderen Hochvoltbusse angeschlossen sind, bereitgestellte Leistung wieder zu reduzieren, wenn der Hochvoltbus mit der Reservebatterie verbunden wird, wobei dies jeweils derart erfolgt, dass
- die dem Elektromotor insgesamt bereitgestellte Leistung jeweils unverändert bleibt.

Ein solches Wechseln der Spannungsversorgung kann dabei konsekutiv für sämtliche Hochvoltbusse erfolgen, wobei die Leistung des Elektromotors durch die betrachtete Schaltfolge konstant gehalten und nicht beeinträchtigt wird.

Die einzelnen Schritte werden beispielsweise jeweils durch entsprechende Steuersignale der Steuereinheit ausgelöst, d. h. die Steuereinheit ist dazu vorgesehen und angepasst, Steuersignale zu generieren, die einen Wechselrichter ein Drehmoment von Null anfordern lassen und dadurch den Strom an dem zugehörigen Hochvoltbus auf Null setzen, die den Hochvoltbus vom Hauptbatteriesystem trennen, die Maßnahmen in Gang setzen, dass die Spannung auf dem Hochvoltbus an die Spannung der zuzuschaltenden Reservebatterie angepasst wird, die den Hochvoltbus mit der Reservebatterie verbinden, und die die von den Wechselrichtern bereitgestellte Leistung hochsetzen bzw. wieder absenken.

Zur Anpassung der Spannung auf dem Hochvoltbus an die Spannung der zuzuschaltenden Reservebatterie sieht eine Ausgestaltung der Erfindung vor, dass das Antriebssystem eine Vorladeschaltung umfasst, die dazu vorgesehen und ausgebildet ist, die Spannung in einem Zwischenkreiskondensator des Wechselrichters über ein Vorladeschütz und einen Vorladewiderstand mit einer Zeitkonstante auf die Spannung der Reservebatterie aufzuladen, bevor über ein Hauptschütz die Spannung der Reservebatterie auf den Hochvoltbus und damit den Zwischenkreiskondesator geschaltet wird. Durch das Anpassen der Spannungen werden Stromspitzen beim Umschalten verhindert. Die Vorladeschaltung ist der Reservebatterie zugeordnet.

Zur Anpassung der Spannung auf dem Hochvoltbus an die Spannung der zuzuschaltenden Reservebatterie sieht eine alternative Ausgestaltung vor, dass das Antriebssystem dazu ausgebildet ist, einen teilweisen generatorischen Betrieb des Elektromotors bereitzustellen und die bei dem generatorischen Betrieb erzeugte Energie zur Ladung eines Zwischenkreiskondensators des Wechselrichters einzusetzen, bevor die Spannung der Reservebatterie auf den Hochvoltbus geschaltet wird. Durch diese Ausgestaltung kann auf eine gesonderte Vorladeschaltung verzichtet werden. Stattdessen wird für den betrachteten Hochvoltbus durch einen generatorischen Betrieb der Zwischenkreiskondensator aufgeladen.

Die vorstehend genannten Ausgestaltungen sehen Implementierungen der Erfindung ohne Gleichspannungswandler vor. Allerdings wird darauf hingewiesen, dass ein Verzicht auf Gleichspannungswandler nicht zwingend ist. Andere Ausgestaltungen der Erfindung sehen Gleichspannungswandler sowohl zwischen den einzelnen Batteriemodulen des Hauptbatteriesystems und den jeweiligen Hochvoltbussen vor als auch zwischen den Reservebatterien und den jeweiligen Hochvoltbussen vor. Durch Gleichspannungswandler kann eine gezielte, ggf. kombinierte Energieabgabe auf die Hochvoltbusse bereitgestellt werden, wobei eine solche Energieabgabe beispielsweise durch eine Steuereinheit des Antriebssystems gesteuert wird.

In einem weiteren Erfindungsaspekt betrifft die vorliegende Erfindung ein Verfahren zur Beaufschlagung eines Hochvoltbusses, der in einem elektrischen Antriebssystem einen Wechselrichter mit Gleichspannung versorgt, mit Gleichspannung einer Reservebatterie, wobei der Wechselrichter zusammen mit weiteren Wechselrichtern einen Elektromotor einer Antriebseinheit des Antriebssystems antreibt. Das Verfahren umfasst:
- Setzen des Stroms an dem Hochvoltbus auf Null,
- Trennen des Hochvoltbusses vom Hauptbatteriesystem,
- Anpassen der Spannung auf dem Hochvoltbus an die Spannung der Reservebatterie, und
- Verbindung des Hochvoltbusses mit der Reservebatterie.

Auf diese Weise erfolgt ein Wechsel der Beaufschlagung mit Gleichspannung von einer Beaufschlagung mit Gleichspannung eines Batteriemoduls des Hauptbatteriesystems zu einer Beaufschlagung mit Gleichspannung der Reservebatterie.

Eine Ausgestaltung hierzu umfasst die weiteren Schritte:
- Erhöhen der von den anderen Wechselrichtern bereitgestellten Leistung, wenn der Strom an dem Hochvoltbus auf Null gesetzt wird, so dass die an dem Elektromotor insgesamt bereitgestellte Leistung unverändert bleibt, und
- Reduzieren der von anderen Wechselrichtern bereitgestellten Leistung, wenn der Hochvoltbus mit der Reservebatterie verbunden wird, so dass die an dem Elektromotor insgesamt bereitgestellte Leistung unverändert bleibt.

Bei dieser Ausgestaltung wird die Leistung des Elektromotors durch den Wechsel nicht beeinflusst.

Die Erfindung wird nachfolgend unter Bezugnahme auf die Figuren der Zeichnung anhand mehrerer Ausführungsbeispiele näher erläutert. Es zeigen:
- Figur 1: eine schematische Darstellung eines Ausführungsbeispiels eines elektrischen Antriebssystems für ein Elektroflugzeug, das ein Hauptbatteriesystem und eine Mehrzahl von Reservebatterien umfasst, die eine Mehrzahl von Hochvoltbussen mit Spannung versorgen;
- Figur 2: das elektrische Antriebssystem der Figur 1, wobei zur Anpassung der Spannung auf einem Hochvoltbus an die Spannung einer Reservebatterie ein generatorischer Betrieb auf dem Hochvoltbus realisiert ist;
- Figur 3: ein Ausführungsbeispiel einer Vorladeschaltung zur Anpassung der Spannung auf einem Hochvoltbus an die Spannung einer Reservebatterie;
- Figur 4: die durch eine elektrische Antriebseinheit verbrauchte Leistung bei den typischen Phasen eines Elektroflugs; und
- Figur 5: ein Ablaufdiagramm eines Verfahrens zur Beaufschlagung eines Hochvoltbusses mit Gleichspannung einer Reservebatterie in einem Antriebssystem gemäß der Figur 1.

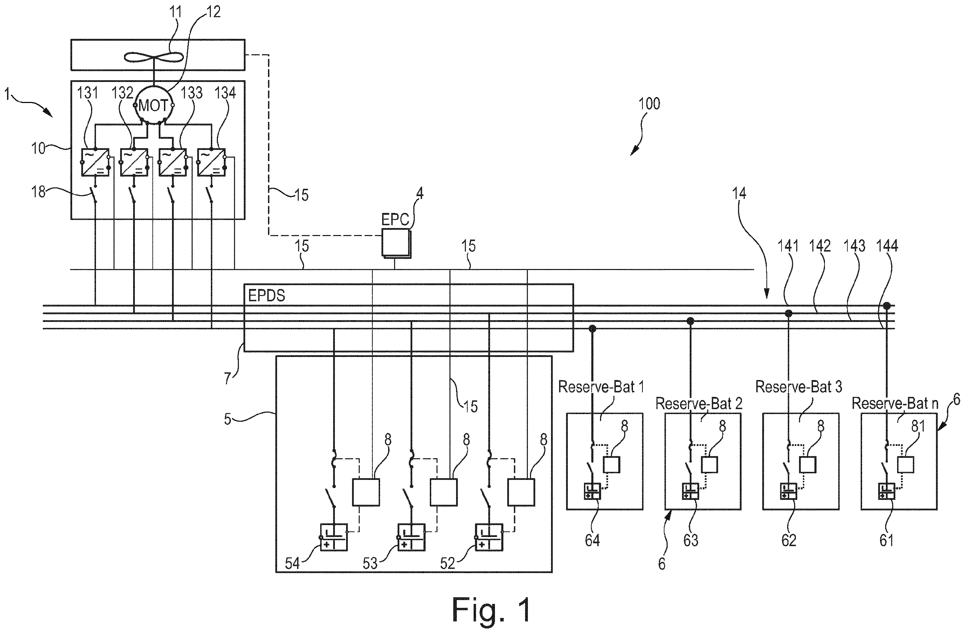

Die Figur 1 zeigt schematisch Komponenten eines elektrischen Antriebssystems 100 für ein Elektroflugzeug. Das elektrische Antriebssystem 100 weist einen elektrischen Flugzeugantrieb 1 auf, der aus einer elektrischen Antriebseinheit 10 und einem durch die Antriebseinheit 10 angetriebenen Propeller 11 besteht. Die Antriebseinheit 10 umfasst dabei einen Elektromotor 12, der über mehrere Wechselrichter 131-134 (auch als Inverter oder DC/AC-Wandler bezeichnet) mit einem Wechselstrom beaufschlagt wird. Bei dem Elektromotor 12 handelt es sich beispielsweise um einen Permanentmagnet-Synchronmotor, der in an sich bekannter Weise von den Wechselrichtern 131-134 jeweils mit 3-Phasen-Wechselspannung versorgt wird. Eingangsseitig sind die Wechselrichter 131-134 über ein Bussystem 14 an ein Hauptbatteriesystem 5 angeschlossen, das die Wechselrichter 131-134 mit einer Gleichspannung versorgt.

Den Wechselrichtern 131-134 ist jeweils ein Schalter 18 zugeordnet, der jeweils ein Zuschalten bzw. Abschalten eines Wechselrichters ermöglicht. Für die nachfolgend beschriebenen Zustände sind die Schalter 18 jeweils geschlossen.

Es wird darauf hingewiesen, dass in der Figur 1 lediglich ein elektrischer Flugzeugantrieb 1 mit Antriebseinheit 10 und Propeller 11 dargestellt ist. Das elektrische Antriebssystem kann mehrere derartige Flugzeugantriebe aufweisen, die dann ebenfalls an das Bussystem 14 angeschlossen sind.

Das Hauptbatteriesystem 5 umfasst eine Mehrzahl von Batteriemodulen 52-54, die jeweils aus einer Mehrzahl von Batteriezellen bestehen, die Energie speichern und wieder abgeben können. Die Anzahl der Batteriemodule 52-54, die sich zu dem Hauptbatteriesystem 5 zusammensetzen, hängt von der Anzahl der Flugzeugantriebe 1 ab. Jedem der Batteriemodule 52-54 ist ein Batterie-Management-System 8 zugeordnet, das das jeweilige Batteriemodul 52-54 überwacht und beispielsweise Informationen zum Ladezustand bzw. zur Spannung und zur Temperatur an eine Steuereinheit 4 übersendet. Das Batterie-Management-System 8 kann dabei über einen Schalter das zugehörige Batteriemodul vom Bussystem 14 trennen.

Das Hauptbatteriesystem 5 kann insgesamt austauschbar ausgebildet sein, so dass es nach einem Flug schnell gewartet werden kann.

Das Bussystem 14 besteht aus einer Mehrzahl von Hochvoltbussen 141-144. Die einzelnen Hochvoltbusse 141-144 werden auch als "Lanes" bezeichnet. Die Wechselrichter 131-134 werden jeweils über einen zugeordneten Hochvoltbus 141-144 mit Gleichspannung versorgt. Die dargestellte Anzahl von vier Hochvoltbusse 141-144 ist dabei nur beispielhaft zu verstehen. Allgemein handelt es sich um n Hochvoltbusse, wobei jeder der Wechselrichter der Flugzeugantriebe 1 von einem zugeordneten Hochvoltbus eingangsseitig mit Gleichspannung beaufschlagt wird.

Die Kopplung der Batteriemodule 52-54 des Hauptbatteriesystems 5 mit den Hochvoltbussen 141-144 des Bussystems 14 erfolgt in einem Kopplungsmodul 7, das wie ein Mehrfachstecker ausgebildet sein kann und die Batteriemodule 52-54 mit den einzelnen Hochvoltbussen 141-144 koppelt. Dabei ist vorgesehen, dass die Anzahl der Batteriemodule 52-54 der Anzahl der Hochvoltbusse 141-144 entspricht, also jedem Hochvoltbus 141-144 ein Batteriemodul 52-54 zugeordnet ist. In der Figur 1 sind dabei nicht sämtliche Batteriemodule des Hauptbatteriesystems 5 dargestellt, wobei das dem Hochvoltbus 141 zugeordnete Batteriemodul nicht dargestellt ist.

Das elektrische Antriebssystem 100 umfasst des Weiteren eine Mehrzahl von Reservebatterien 61-64, die jeweils in einem Reservemodul 6 angeordnet sind, das zusätzlich ebenfalls ein Batterie-Management-System 8 aufweist. Dabei ist für jeden der Hochvoltbusse 141-144 eine gesonderte Reservebatterie 61-64 vorgesehen.

Die Steuereinheit 4 stellt die zentrale Steuerlogik des elektrischen Antriebssystems 100 bereit. Sie ist über einen Steuerbus 15 mit den einzelnen Wechselrichtern 131-134, dem Propeller 11, den Batterie-Management-Systemen 8 im Hauptbatteriesystem 5 und auch mit den Batterie-Management-Systemen 8 der einzelnen Reservemodulen 6 (nicht gesondert dargestellt) verbunden. Die Steuereinheit 4 steuert in an sich bekannter Weise Drehzahl und/oder Leistung des Elektromotors 12 sowie den Propellerwinkel des Propellers 11. Die Steuereinheit 4 steuert darüber hinaus die Beaufschlagung einer Gleichspannung auf den Hochvoltbussen 141-144 entweder über das Hauptbatteriesystem 5 oder über die Reservebatterien 61-64. Letzteres wird nachfolgend weitergehend erläutert.

So ist vorgesehen, dass bei Vorliegen eines entsprechenden Steuersignals der Steuereinheit 4 oder bei Vorliegen eines externen Steuersignals, das beispielsweise durch einen Piloten ausgelöst wird, die Beaufschlagung der Hochvoltbusse 141-144 mit Gleichspannung dahingehend gewechselt wird, dass von einer Beaufschlagung über das Hauptbatteriesystem 5 zu einer Beaufschlagung über die Reservebatterien 61-64 gewechselt wird. Dabei ist vorgesehen, dass für jeden Hochvoltbus 141-144 ein solcher Wechsel gesondert durchführbar ist. Im Folgenden wird beispielsweise der Hochvoltbus 141 exemplarisch für die Hochvoltbusse 141-144 betrachtet.

Der Ausgangszustand ist dabei der, dass der Hochvoltbus 144 durch eines der Batteriemodule des Hauptbatteriesystems 5, nämlich das Batteriemodul 54 mit Gleichstrom beaufschlagt wird. Dieser Gleichstrom liegt dabei über den Hochvoltbus 144 an einem der Wechselrichter, nämlich dem Wechselrichter 134 an. Wenn durch das dem Batteriemodul 54 zugeordnete Batterie-Management-System 8 festgestellt wird, dass der Ladezustand des Batteriemoduls 54 einen vorgegebenen Wert unterschreitet (beispielsweise die durch das Batteriemodul 54 bereitgestellte Spannung unter einen vorgegebenen Wert abfällt), so wird diese Information der Steuereinheit 4 mitgeteilt. Diese bewirkt daraufhin einen Wechsel der Spannungsversorgung für den Hochvoltbus 144. Hierzu wird von einer Beaufschlagung mit Gleichspannung durch das Batteriemodul 54 zu einer Beaufschlagung mit Gleichspannung durch die Reservebatterie 64 gewechselt.

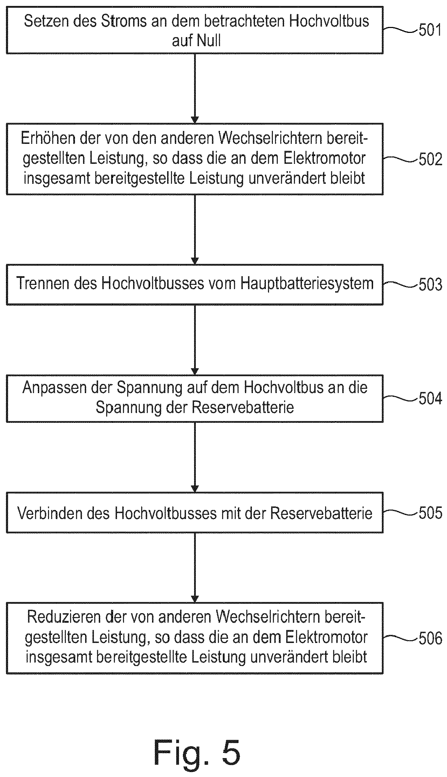

Die Figur 5 zeigt beispielhaft ein Ablaufdiagramm eines solchen Wechsels. Gemäß Schritt 501 wird hierzu zunächst der Strom auf dem betrachteten Hochvoltbus 144 auf Null gesetzt. Dies erfolgt, indem die Steuereinheit 4 den Wechselrichter 134 dahingehend steuert, dass dieser ein Drehmoment von Null anfordert. Die Schaltelemente des Wechselrichters 134 schalten dann nicht und es fließt kein Strom. Da das Setzen des Stroms auf Null zu einem Leistungsabfall am Elektromotor 12 führen würde, wird gleichzeitig oder mit geringer zeitlicher Verzögerung gemäß Schritt 502 die von den anderen Wechselrichtern 131-133 bereitgestellte Leistung erhöht, so dass der Elektromotor 12 insgesamt mit unveränderter Leistung betrieben wird.

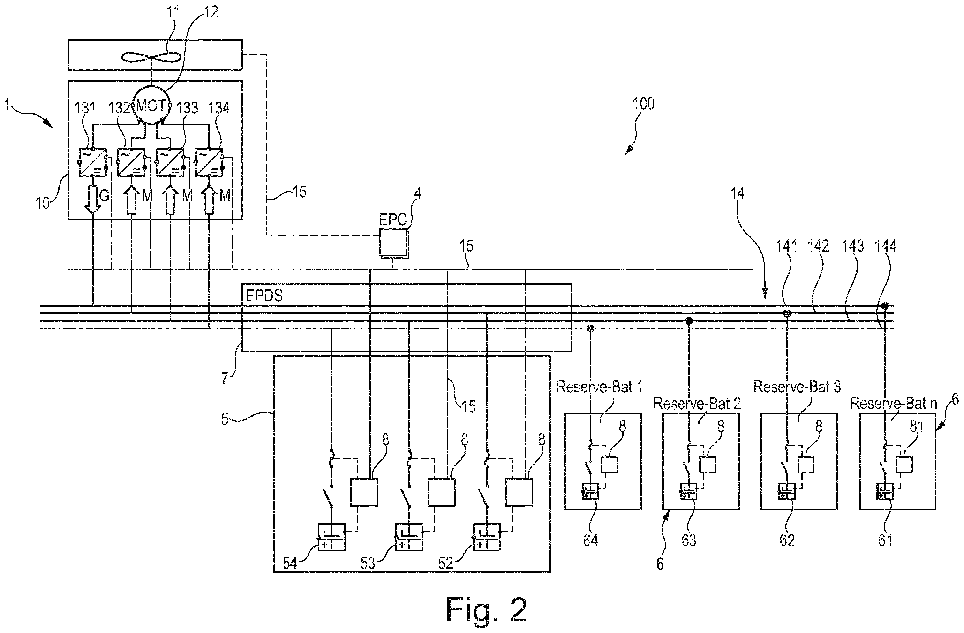

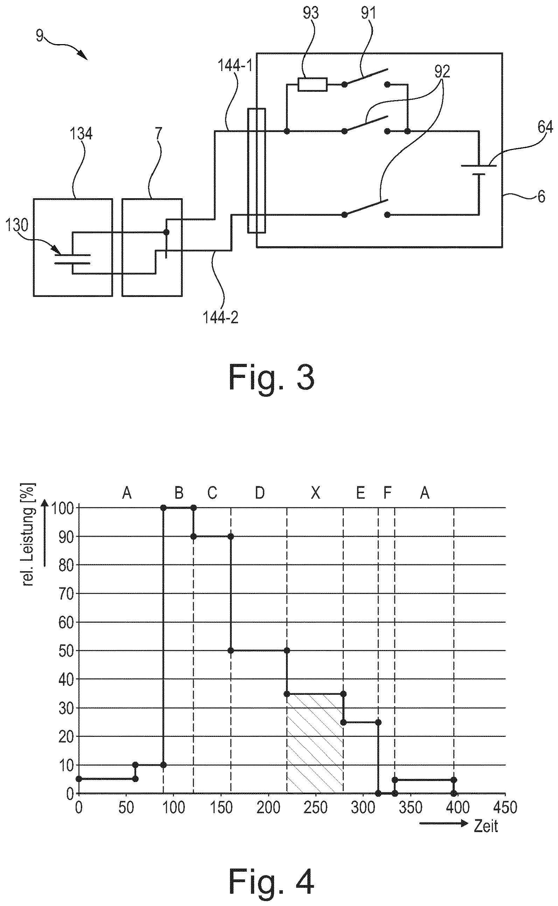

Anschließend wird gemäß Schritt 503 der Hochvoltbus 144 vom Hauptbatteriesystem 5, nämlich von dem zugeordneten Batteriemodul 54 getrennt. Dies erfolgt beispielsweise durch das zugeordnete Batterie-Management-System 8 auf ein Steuersignal der Steuereinheit 4 hin. Nachdem der Hochvoltbus 144 vom Hauptbatteriesystem 5 getrennt ist, kann der Hochvoltbus 141 gemäß Schritt 505 mit der diesem Hochvoltbus 141 zugeordneten Reservebatterie 64 verbunden werden. Um das Auftreten von Stromspitzen beim Zuschalten der Reservebatterie 64 zu vermeiden, wird zuvor in Schritt 504 die Spannung auf dem Hochvoltbus 144 an die Spannung der Reservebatterie 64 angepasst. Ausführungsbeispiele hierzu werden anhand der Figuren 2 und 3 beschrieben.

Da nach erneuter Bereitstellung einer Gleichspannung auf dem Hochvoltbus 144 und der Wiederaufnahme des Betriebs des Wechselrichters 134 nun eine zu starke Leistung für den Elektromotor 12 bereitgestellt würde, wird in Schritt 506 die von den anderen Wechselrichtern 131-134 bereitgestellte, in Schritt 502 erhöhte Leistung wieder auf den Anfangswert reduziert, so dass die an dem Elektromotor 12 insgesamt bereitgestellte Leistung weiterhin unverändert bleibt.

Allgemein gilt, dass die Steuereinheit 4 beispielsweise einen Prozessor und ein nichtflüchtiges Speichermedium umfasst, in dem Computerprogramme gespeichert sind, die bei Ausführung durch den Prozessor die Steuereinheit 4 veranlassen, unter Berücksichtigung von Eingangssignalen, die die Steuereinheit 4 erhält, Steuersignale zu generieren, die die beschriebenen Maßnahmen steuern.

Der anhand der Figur 5 beschriebene Wechsel erfolgt ohne den Einsatz von Gleichspannungswandlern (DC/DC-Wandlern). Vielmehr wird die Gleichspannung auf den einzelnen Hochvoltbussen 141-144 direkt geschaltet. Gemäß Schritt 504 der Figur 5 ist es dabei erforderlich, vor dem Verbinden des Hochvoltbusses 141-144 mit der Reservebatterie 61-64 die Spannungen anzugleichen. Hierbei ist zu beachten, dass den Wechselrichtern 31-34 jeweils ein Zwischenkreiskondensator zugeordnet ist, der den jeweiligen Wechselrichter mit der Spannung auf dem Hochvoltbus verkoppelt, die im betrachteten Fall gemäß Schritt 505 nun durch die Reservebatterie bereitgestellt wird.

Die Figur 3 zeigt ein Ausführungsbeispiel, bei dem die Spannung auf dem Hochvoltbus 144 an die Spannung der zuzuschaltenden Reservebatterie über eine Vorladeschaltung 9 angeglichen wird. Hierzu zeigt die Figur 3 schematisch ein Batteriemodul 6 mit einer Reservebatterie 64. Die Reservebatterie 64 ist gemäß der Beschreibung der Figur 1 über das Kopplungsmodul 7 mit dem einen Wechselrichter 134 verbunden. Zur Bereitstellung einer Gleichspannung sind zwei Leitungen 144-1,144-2 vorgesehen, die zusammen den Hochvoltbus 144 bilden, wobei die beiden Leitungen 144-1,144-2 mit dem Pluspol oder und dem Minuspol der Reservebatterie 64 verbunden sind. Gleichzeitig sind sie mit dem Pluspol und den Minuspol eines Zwischenkreiskondensators 130 verbunden, der dem Wechselrichter 134 zugeordnet ist.

Für eine langsame Anpassung der Spannung des Zwischenkreiskondensators 130 an die Spannung der Reservebatterie 64 ist die Vorladeschaltung 9 vorgesehen. Diese umfasst ein Vorladeschütz 91 und dazu in Reihe einen Vorladewiderstand 93. Parallel dazu sind zwei Hauptschütze 92 vorgesehen. Bevor die Hauptschütze 92 geschlossen werden, wird der Vorladeschütz 91 geschlossen, so dass sich der Zwischenkreiskondensator 130 über den Vorladewiderstand 93 langsam auflädt. Da der Zwischenkreiskondensator 130 einen geringen Innenwiderstand aufweist, werden hierdurch Stromspitzen beim Zuschalten der Reservebatterie 64 verhindert.

Von der Verwendung einer Vorladeschaltung 9 kann abgesehen werden, wenn der Zwischenkreiskondensator 130 in einem generatorischen Betrieb aufgeladen wird, bevor der Hochvoltbus mit der Reservebatterie verbunden wird. Einen solchen Zustand zeigt die Figur 2, die ansonsten der Figur 1 entspricht. Die Wechselrichter 132-134 werden im motorischen Betrieb (Pfeil M) betrieben und treiben den Elektromotor 12 an. Der Wechselrichter 131 wird dagegen im generatorischen Betrieb (Pfeil G) betrieben, wobei ein Teil des Elektromotors generatorisch betrieben wird. Entsprechend wird ein Energiestrom in Richtung des Hochvoltbusses 141 bereitgestellt, der dazu verwendet wird, den Zwischenkreiskondensator 130 aufzuladen.

Über einen generatorischen und ggf. einen motorischen Betrieb des Wechselrichters 131-134, an dessen Hochvoltbus 141-144 ein Wechsel der Beaufschlagung mit Gleichspannung erfolgen soll, kann somit der Zwischenkreiskondensator 130 des jeweils betrachteten Wechselrichters 131-134 auf eine gewünschte Kapazität aufgeladen werden, bevor eine Reservebatterie 61-64 zugeschaltet wird.

Die Reservebatterien 61-64 des elektrischen Antriebssystems 100 können für einen vorgesehenen Betriebszustand und Anwendungsfall optimiert sein. Im Vergleich zu den Batteriemodulen 51-53 des Hauptbatteriesystems 5 sind sie dabei beispielsweise auf eine höhere Energiedichte und eine geringere Leistungsdichte ausgelegt. Dies wird anhand des Diagramm der Figur 4 illustriert, in dem die y-Achse die relative Leistung eines Elektromotors 12 in Prozent bei verschiedenen Flugphasen eines Elektroflugzeugs darstellt.

Im Bodenbetrieb (Flugphase A) ist die Leistung minimal. Beim Start B steigt sie auf ein Maximum (100%) und fällt in der Steigflugphase C leicht ab. Die Flugphase D bezeichnet den Reiseflug. Hier liegt die relative Leistung bei nur noch 50 %. Im Sinkflug (Flugphase E) fällt die Leistung auf etwa 25 % ab. Nach dem Landen liegt die Leistung in der Ausrollphase F gleich Null, bevor sie wieder im Bodenbetrieb A leicht ansteigt.

Die durch die Reservebatterien bereitgestellte Leistung X liegt dabei im Leistungsbereich zwischen der Sinkphase E und dem Reiseflug D. Die Reservebatterien sind somit für eine vergleichsweise geringe Leistungsdichte optimiert, die deutlich unterhalb der Leistungsdichte liegt, die das Hauptbatteriesystem 5 für den Start und den Steigflug bereitstellen muss. Die Reservebatterien sind dabei dahingehend optimiert, dass sie aufgrund einer hohen Energiedichte in der Lage sind, im Falle eines Ausfalls der Hauptstromversorgung das Elektroflugzeug noch über eine möglichst lange Entfernung fliegen zu können.

Dabei kann vorgesehen sein, dass die Reservebatterien fest im Flugzeug installiert sind.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Weiter wird darauf hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Elektrisches Antriebssystem, das aufweist:
- mindestens eine elektrische Antriebseinheit (10), die einen Elektromotor (12) und Wechselrichter (131-134) umfasst, die jeweils eine eingangsseitige Gleichspannung in eine ausgangsseitige Wechselspannung wandeln, die dem Elektromotor (12) bereitgestellt wird,
- wobei die Wechselrichter (131-134) jeweils über einen Hochvoltbus (141-144) mit Gleichspannung versorgt werden,
- ein Hauptbatteriesystem (5), das eine Mehrzahl von Batteriemodulen (52-54) aufweist, wobei die Batteriemodule (52-54) dazu vorgesehen sind, die Hochvoltbusse (141-144) jeweils mit Gleichspannung zu beaufschlagen,
- eine Mehrzahl von Reservebatterien (61-64), wobei für jeden Hochvoltbus (141-144) eine gesonderte Reservebatterie (61-64) vorgesehen ist,
- wobei das Antriebssystem dazu ausgebildet ist, bei Vorliegen eines entsprechenden Steuersignals jeweils für einen der Hochvoltbusse (141-144) einen Wechsel der Beaufschlagung mit Gleichspannung durchzuführen, wobei von einer Beaufschlagung mit Gleichspannung des dem Hochvoltbus (141-144) zugeordneten Batteriemoduls (52-54) des Hauptbatteriesystems (5) zu einer Beaufschlagung mit Gleichspannung der dem Hochvoltbus (141-144) zugeordneten Reservebatterie (61-64) gewechselt wird.

2. Antriebssystem nach Anspruch 1, **dadurch gekennzeichnet, dass** die Reservebatterien (61-64) im Vergleich zu den Batteriemodulen (52-54) des Hauptbatteriesystems (5) auf eine höhere Energiedichte und eine geringere Leistungsdichte ausgelegt sind.

3. Antriebssystem nach Anspruch 1 oder 2, **dadurch gekennzeichnet, dass** die Reservebatterien (61-64) im Vergleich zu den Batteriemodulen (52-54) des Hauptbatteriesystems (5) auf eine geringere Zykluslebensdauer ausgelegt sind.

4. Antriebssystem nach einem der vorangehenden Ansprüche, **dadurch gekennzeichnet, dass** das Hauptbatteriesystem (5) als austauschbares Batteriesystem ausgebildet ist.

5. Antriebssystem nach einem der vorangehenden Ansprüche, **dadurch gekennzeichnet, dass** die Reservebatterien (61-64) im Antriebssystem fest installiert sind.

6. Antriebssystem nach einem der vorangehenden Ansprüche, **dadurch gekennzeichnet, dass** das Antriebssystem dazu ausgebildet ist, bei Vorliegen eines internen, durch eine Steuereinheit (4) des Antriebssystems bereitgestellten Steuersignals den Wechsel der Beaufschlagung mit Gleichspannung durchzuführen, wobei die Steuereinheit (4) dazu ausgebildet ist, Informationen über den Ladezustand der Batteriemodule (52-54) des Hauptbatteriesystems (5) zu erhalten und unter Berücksichtigung dieses Ladezustandes ein derartiges Steuersignal zu erzeugen.

7. Antriebssystem nach einem der vorangehenden Ansprüche, **dadurch gekennzeichnet, dass** das Antriebssystem dazu ausgebildet ist, bei Vorliegen eines externen, durch eine Bedienperson erzeugten Steuersignals den Wechsel der Beaufschlagung mit Gleichspannung durchzuführen.

8. Antriebssystem nach einem der vorangehenden Ansprüche, **dadurch gekennzeichnet, dass** die Batteriemodule (52-54) des Hauptbatteriesystems (5) und die Reservebatterien (61-64) jeweils ohne Gleichspannungswandler an die Hochvoltbusse (141-144) angeschlossen sind.

9. Antriebssystem nach Anspruch 8, **dadurch gekennzeichnet, dass** das Antriebssystem dazu ausgebildet ist, bei Vorliegen eines Steuersignals zum Wechsel der Beaufschlagung mit Gleichspannung
- der Strom an dem Hochvoltbus (141-144), auf dem der Wechsel der Beaufschlagung mit Gleichspannung erfolgen soll, auf Null zu setzen,
- den Hochvoltbus (141-144) vom Hauptbatteriesystem (5) zu trennen,
- die Spannung auf dem Hochvoltbus (141-144) an die Spannung der zuzuschaltenden Reservebatterie (61-64) anzupassen, und
- den Hochvoltbus (141-144) mit der Reservebatterie (61-64) zu verbinden.

10. Antriebssystem nach Anspruch 9, **dadurch gekennzeichnet, dass** das Antriebssystem des Weiteren dazu ausgebildet ist,
- die von den Wechselrichtern (131-134), die an die anderen Hochvoltbusse (141-144) angeschlossen sind, bereitgestellte Leistung heraufzusetzen, wenn der Strom an dem Hochvoltbus (141-144) auf Null gesetzt wird, und
- die von den Wechselrichtern (131-134), die an die anderen Hochvoltbusse (141-144) angeschlossen sind, bereitgestellte Leistung wieder zu reduzieren, wenn der Hochvoltbus (141-144) mit der Reservebatterie (61-64) verbunden wird, derart, dass
- die dem Elektromotor (12) insgesamt bereitgestellte Leistung jeweils unverändert bleibt.

11. Antriebssystem nach Anspruch 9 oder 10, **dadurch gekennzeichnet, dass** das Antriebssystem dazu ausgebildet ist, die Abfolge gemäß Anspruch 9 oder 10 für jeden der Hochvoltbusse (141-144) des Antriebssystems konsekutiv durchzuführen.

12. Antriebssystem nach einem der Ansprüche 9 bis 11, **dadurch gekennzeichnet, dass** das Antriebssystem zum Anpassen der Spannung auf dem Hochvoltbus (141-144) an die Spannung der zuzuschaltenden Reservebatterie (61-64) eine Vorladeschaltung (9) umfasst, die dazu vorgesehen und ausgebildet ist, die Spannung in einem Zwischenkreiskondensator (130) des Wechselrichters (131-134) über ein Vorladeschütz (91) und einen Vorladewiderstand (92) mit einer Zeitkonstante auf die Spannung der Reservebatterie (61-64) aufzuladen, bevor über ein Hauptschütz (92) die Spannung der Reservebatterie (61-64) auf den Hochvoltbus (141-144) geschaltet wird.

13. Antriebssystem nach einem der Ansprüche 9 bis 11, **dadurch gekennzeichnet, dass** das das Antriebssystem zum Anpassen der Spannung auf dem Hochvoltbus (141-144) an die Spannung der zuzuschaltenden Reservebatterie (61-64) dazu ausgebildet ist, einen teilweisen generatorischen Betrieb des Elektromotors (12) bereitzustellen und die bei dem generatorischen Betrieb erzeugte Energie zur Ladung eines Zwischenkreiskondensators (130) des dem betrachteten Hochvoltbus zugeordneten Wechselrichters (131-134) einzusetzen, bevor die Spannung der Reservebatterie (61-64) auf den Hochvoltbus (141-144) geschaltet wird.

14. Verfahren zur Beaufschlagung eines Hochvoltbusses (141-144), der in einem elektrischen Antriebssystem einen Wechselrichter (131-134) mit Gleichspannung versorgt, mit Gleichspannung einer Reservebatterie (61-64), wobei der Wechselrichter (131-134) zusammen mit weiteren Wechselrichtern (131-134) einen Elektromotor (12) einer Antriebseinheit (10) des Antriebssystems antreibt, und wobei das Verfahren umfasst:
- Setzen des Stroms an dem Hochvoltbus (141-144) auf Null,
- Trennen des Hochvoltbusses (141-144) vom Hauptbatteriesystem (5),
- Anpassen der Spannung auf dem Hochvoltbus (141-144) an die Spannung der Reservebatterie (61-64), und
- Verbindung des Hochvoltbusses (141-144) mit der Reservebatterie (61-64).

15. Verfahren nach Anspruch 14, **gekennzeichnet durch** die weiteren Schritte:
- Erhöhen der von den anderen Wechselrichtern (131-134) bereitgestellten Leistung, wenn der Strom an dem Hochvoltbus (141-144) auf Null gesetzt wird, so dass die an dem Elektromotor (12) insgesamt bereitgestellte Leistung unverändert bleibt, und
- Reduzieren der von anderen Wechselrichtern (131-134) bereitgestellten Leistung, wenn der Hochvoltbus (141-144) mit der Reservebatterie (61-64) verbunden wird, so dass die an dem Elektromotor (12) insgesamt bereitgestellte Leistung unverändert bleibt.

16. Verfahren nach Anspruch 14 oder 15, **dadurch gekennzeichnet, dass** zum Anpassen der Spannung auf dem Hochvoltbus (141-144) an die Spannung der Reservebatterie (61-64) mittels einer Vorladeschaltung (9) die Spannung in einem Zwischenkreiskondensator (130) des Wechselrichters (131-134) über ein Vorladeschütz (91) und einen Vorladewiderstand (93) mit einer Zeitkonstante auf die Spannung der Reservebatterie (61-64) aufgeladen wird, bevor über ein Hauptschütz (92) die Spannung der Reservebatterie (61-64) auf den Hochvoltbus (141-144) geschaltet wird.

17. Verfahren nach Anspruch 14 oder 15, **dadurch gekennzeichnet, dass** zum Anpassen der Spannung auf dem Hochvoltbus (141-144) an die Spannung der Reservebatterie (61-64) ein teilweiser generatorischer Betrieb des Elektromotors (12) bereitgestellt und die bei dem generatorischen Betrieb erzeugte Energie zur Ladung eines Zwischenkreiskondensators (130) des Wechselrichters (131-134) verwendet wird, bevor die Spannung der Reservebatterie (61-64) auf den Hochvoltbus (141-144) geschaltet wird.
